# EUROPÄISCHE PATENTANMELDUNG

(11) **EP 1 361 739 A1**
(43) Veröffentlichungstag der Anmeldung: **12.11.2003**
(21) Anmeldenummer: 03009766.1
(22) Anmeldetag: 06.05.2003
(51) Int. Cl.: H04M 3/51, G10L 15/26

(54) **Verfahren und System zur Verarbeitung von Sprachdaten mit vorausgehender Erkennung der Sprache**

(30) Priorität: 08.05.2002 DE 10220524
(71) Anmelder: SAP Aktiengesellschaft, 69190 Walldorf (DE)
(72) Erfinder: Geppert, Nicolas Andre, 68789 St. Leon-Rot (DE); Sattler, Jürgen, 69168 Wiesloch (DE)

(57) **Zusammenfassung**

Die vorliegende Erfindung betrifft eine Vorrichtung und ein Verfahren zur Behandlung von Sprachdaten aus einem Gespräch zwischen einem ersten menschlichen und einem oder mehreren zweiten menschlichen Gesprächspartnern und/oder einem Gesprächsannahmesystem oder zwischen einem ersten menschlichen und einem oder mehreren zweiten menschlichen Gesprächspartnern, bei dem aus dem Gespräch Sprachdaten erzeugt werden, dadurch gekennzeichnet,
- und dass die Sprache des ersten Gesprächspartners automatisch erkannt wird
- dass die Sprachdaten ganz oder teilweise mittels eines automatischen Spracherkennungssystems analysiert und in Text umgewandelt wird.

## Beschreibung

Die vorliegende Erfindung betrifft ein Verfahren und ein elektronisches System zur automatischen Behandlung von Sprachdaten aus einem Gespräch zwischen einem ersten menschlichen und einem oder mehreren zweiten menschlichen Gesprächspartnern und/oder einem Gesprächsannahmesystem oder zwischen einem ersten menschlichen und einem oder mehreren zweiten menschlichen Gesprächspartnern, bei dem aus dem Gespräch Sprachdaten erzeugt werden.

Die automatische Spracherkennung ist seit geraumer Zeit aus der Praxis bekannt und wird zur maschinellen Umsetzung gesprochener Sprache in geschriebenen Text eingesetzt.

Spracherkennungssysteme lassen sich nach der räumlichenzeitlichen Verknüpfung von Sprachaufnahme und Sprachverarbeitung in zwei Gruppen unterteilen.
- "Online-Erkenner" sind Spracherkennungssysteme, die gesprochene Äußerungen unmittelbar in geschriebenen Text umsetzen. Hierzu zählen die meisten Bürodiktiersysteme.
- "Offline-Erkennungssysteme" führen eine zeitversetzte Spracherkennung zu einer Diktataufzeichnung durch, die der Anwender beispielsweise mit einem digitalen Aufzeichnungsgerät angelegt hat.

Die bislang aus dem Stand der Technik bekannten sprachverarbeitenden Systeme können keine sprachlichen Inhalte verstehen, d.h. es können nicht wie beim menschlichen Sprachverstehen intelligente Hypothesen über das gesagte a priori gebildet werden. Statt dessen wird der akustische Erkennungsprozess durch das Heranziehen von text- oder anwendungsspezifischen Hypothesen unterstützt. Die folgenden Hypothesen bzw. Erkennungsmodi sind bislang verbreitet:
- die Diktat- bzw. Vokabular-Erkennung bedient sich einer Verknüpfung von domänenspezifischer Wortstatistik und Wortschätzen. Die Diktat- bzw. Vokabel-Erkennung findet bei Bürodiktiersystemen Anwendung;
- die Grammatikerkennung stützt sich auf anwendungsspezifisch gestaltete Regelsysteme, integriert hierbei erwartete Satzbaupläne unter Verwendung von Variablen;
- die Einzelworterkennung bzw. Keyword-Spotting wird dann eingesetzt, wenn erkennungsunterstützende Sprachdaten fehlen und wenn innerhalb längerer Sprachpassagen einzelne festgelegte Schlüsselwörter erwartet werden.

Ein Spracherkennungssystem zur Behandlung von Sprechinformationen, die zwischen einem menschlichen Gesprächspartner und einem automatischen Gesprächsannahmesystem, ausgetauscht werden, sind beispielsweise aus der Veröffentlichung "Spoken language systems - beyond prompt and response" (BT Technol J Vol 14 No 1 January 1996) bekannt. Das Dokument offenbart ein Verfahren und ein System zur interaktiven Kommunikation zwischen einem menschlichen Gesprächspartner und einem automatischen Gesprächsannahmesystem. Das System weist eine Spracherkennung auf, die eine gesprochene Äußerung in einzelne oder mehrere Wörter oder Wortketten konvertiert. Weiter ist ein Schritt der Bedeutungsextraktion vorhanden, in dem der erkannten Wortfolge eine Bedeutung zugemessen wird, aufgrund derer das Gespräch von Seiten des automatischen Gesprächsannahmesystems einem nächsten Schritt zugeführt werden kann. Mittels einer Datenbankabfrage kann zu einem erkannten Wort eine Zusatzinformation erhalten werden. Aufgrund der erkannten und ermittelten Informationen wird eine Antwort generiert, die mittels eines Sprachsynthesizers in gesprochene Sprache transformiert und an den menschlichen Gesprächspartner weitergegeben wird. Sofern der menschliche Gesprächspartner über ein multimodales System, d.h. (Internet-PC mit Sprachanschluss) mit dem Gesprächsannahmesystem kommuniziert, können ihm Informationen, die das automatische Gesprächsannahmesystem ermittelt hat, visuell am Bildschirm und/oder akustisch über PC-Lautsprecher bzw. Kopfhörer zur Verfügung gestellt werden. Für weitere Details sei auf das genannte Dokument und die dort zitierte Sekundärliteratur verwiesen.

Trotz diesem hohen Grad an Automatisierung sind solche Spracherkennungssysteme insbesondere hinsichtlich der Erkennung der Sprachinformation aufgrund der von Person zu Person unterschiedlichen Aussprache problematisch, wenn das Spracherkennungssystem nicht im Rahmen einer Lernphase auf die konkrete Aussprache einer Person eingestellt ist. Insbesondere Gesprächsannahmesysteme, bei denen ein Gesprächspartner eine Information erfragt oder eine Information abgibt, sind aufgrund der hohen Fehlerrate beim Spracherkennungsprozess und der unterschiedlichen Reaktion der einzelnen Gesprächspartner noch nicht praktikabel. Daher ist es bei vielen Anwendungen immer noch zwingend notwendig, anstelle eines Gesprächsannahmesystems einen zweiten Gesprächspartner einzusetzen, der Informationen des ersten Gesprächspartners entgegennimmt oder zur Verfügung stellt. Falls der zweite Gesprächspartner Informationen entgegennimmt, ist diese - in welcher Form auch immer - zumeist aufzunehmen, niederzuschreiben oder in einen Computer einzugeben.

Des weiteren ergibt sich häufig die Notwendigkeit, dass solche Gespräche nachbearbeitet werden müssen, z.B. um bei einem Verkaufsgespräch oder einer Vertragsverhandlung nachvollziehen zu können, wer was in welchem Zusammenhang gesagt hat. Die Nachbearbeitung aus der Erinnerung oder aus mitgeschriebenen Notizen ist häufig fehlerhaft, und der zeitliche Ablauf lässt sich kaum genau rekonstruieren. Mitschnitte auf Tonträgern sind zwar möglich, sie lassen sich jedoch nur schwer in die gängige EDV-Landschaft integrieren. Digitale Aufzeichnungen der akustischen Daten haben einen hohen Bedarf an Speicherplatz.

Diese Verfahrensweisen haben nicht nur hohe Personalkosten zur Folge, sondern nehmen auch sehr viel Zeit in Anspruch, so dass der Gesprächsdurchsatz sowie die Nachbereitung nicht optimal ist.

Ein weiteres Problem stellt sich, wenn eine Vielzahl von Gesprächen geführt werden und diese dann, sofern sie in irgend einer Form gespeichert sind, möglichst schnell und einfach aufgefunden werden sollen. Insbesondere ist gewünscht, z.B. für statistische Zwecke einen einfachen Zugriff auf die Gesprächsdaten zu haben.

Zusätzlich wäre es vorteilhaft, wenn man einen Gesprächspartner automatisch identifizieren könnte.

In diesem Zusammenhang kann auch die Situation entstehen, dass ein Gesprächspartner in einer Sprache spricht, auf die das Spracherkennungssystem nicht eingestellt ist. In so einem Fall wäre es vorteilhaft, wenn die Sprache des betreffenden Gesprächspartners automatisch erkannt werden könnte.

Der vorliegenden Erfindung liegt daher die Aufgabe zugrunde, ein Verfahren bereitzustellen, bei dem der Gesprächsdurchsatz erhöht und vor allem die Sprache des Gesprächspartners identifiziert werden kann.

Diese Aufgabe wird erfindungsgemäß gelöst durch ein Verfahren zur Behandlung von Sprachdaten aus einem Gespräch zwischen einem ersten menschlichen und einem oder mehreren zweiten menschlichen Gesprächspartnern und/oder einem Gesprächsannahmesystem oder zwischen einem ersten menschlichen und einem oder mehreren zweiten menschlichen Gesprächspartnern, bei dem aus dem Gespräch Sprachdaten erzeugt werden, dadurch gekennzeichnet,
- und dass die Sprache des ersten Gesprächspartners automatisch erkannt wird
- dass die Sprachdaten ganz oder teilweise mittels eines automatischen Spracherkennungssystems analysiert und in Text umgewandelt wird.

Sprachdaten im Sinne der Erfindung sind die Daten eines akustischen Gespräches, die mit Hilfe eines technischen Aufnahmesystems (z.B. Mikrofon) aus den Gesprächsäußerungen erzeugt und/oder registriert werden können. Ein automatisches Spracherkennungssystem im Sinne der Erfindung ist ein System, das solche Sprachdaten aus einer gesprochene Äußerung automatisch in Text umwandeln kann. Text im Sinne der Erfindung ist weit zu interpretieren, es bedeutet orthographische bzw. textuelle Information, die z.B. als Text an einer Ausgabevorrichtung wie Drucker oder Bildschirm als Text im üblichen Sinne dargestellt werden kann, die aber auch als z.B. als (Binär-) Code auf einem digitalen Speichermedium gespeichert werden kann.

Gegenstand der Erfindung ist weiter ein System zur Durchführung dieser Verfahren, aufweisend
- mindestens eine elektronische Vorrichtung zur Erkennung und Extrahierung von Sprachdaten (Spracherkennungssystem), die mit einer oder mehreren Vorrichtungen zur Erfassung von Sprachdaten (Gesprächsannahmesystem) verbindbar ist, und
- ein oder mehrere Mittel zur Darstellung und/oder Speicherung von erkannten und/oder extrahierten Sprachdaten, wobei das oder jedes Mittel zur Darstellung und/oder Speicherung direkt oder indirekt mit der Erkennungs- und Extrahierungsvorrichtung verbunden ist.

"Direkt" bedeutet hier, dass die Verbindung über ein Kabel hergestellt ist, "indirekt" bedeutet hier drahtlos, beispielsweise über das Internet, über Funk- oder Infrarotverbindung.

Gegenstand der Erfindung ist ebenso ein Computerprogramm mit Programmcode-Mitteln, um alle Schritte von einem beliebigen der erfindungsgemäßen Verfahren auszuführen, wenn das Programm auf einem Computer ausgeführt wird, sowie ein Computerprogrammprodukt, das ein derartiges Programm auf einem computerlesbaren Speichermedium enthält, sowie ein Computer mit einem flüchtigen oder nichtflüchtigen Speicher, in dem ein derartiges Programm gespeichert ist.

Besondere Ausführungsformen des erfindungsgemäßen Verfahrens bzw. besondere Ausgestaltungen der erfindungsgemäßen Vorrichtungen sind in den jeweiligen Unteransprüchen offenbart. Es können auch einzelne oder mehrere oder beliebige Kombinationen der in den jeweiligen Unteransprüchen einer Kategorie offenbarten Merkmale zusammen mit den Merkmalen des jeweiligen Hauptanspruchs erfinderische Lösungen der der Erfindung zugrunde liegenden Aufgabe darstellen.

Die Erkennung der Sprache eines Gesprächspartners kann beispielsweise folgendermaßen durchgeführt werden: Die Sprachdaten werden online, d.h. möglichst zeitnah bzw. nahezu zeitgleich, einer Frequenzanalyse unterzogen. Dies kann mittels der bekannten Algorithmen, beispielsweise der Fouriertransformation, durchgeführt werden. Als Ergebnis erhält man ein Frequenzspektrum, in dem einer bestimmten Schallfrequenz eine bestimmte Lautstärke zugeordnet ist. Hat man für mehrere Sprachen charakteristische Merkmale solcher Spektren, die also für eine bestimmte Sprache typisch sind, vorab gespeichert, so kann man einen Vergleich der online aufgenommenen Spektren mit den gespeicherten durchführen und bei einer gefundenen Übereinstimmung die entsprechende Sprache dem betreffenden Gesprächspartner zuordnen und das Spracherkennungssystem auf diese Sprache einstellen, oder das Gespräch automatisch an eine Annahmestelle weiterleiten, die für die betreffende Sprache vorgesehen ist. Ist die Zuordnung der Sprache nicht eindeutig möglich, weil z.B. die Aufnahme der Sprachdaten zu schlecht ist oder der Sprechende zu undeutlich spricht, können sich mehrere Sprachen als mögliche Sprachen ergeben. Dann kann eine Wahrscheinlichkeitsbetrachtung durchgeführt werden, dergestalt, dass die Sprache als die wahrscheinlichste angesehen wird, für die beim Vergleich die größte Zahl an übereinstimmenden Merkmalen gefunden wird. Durch wiederholte Aufnahme von Spektren kann bei entsprechend langer Gesprächsdauer bzw. bei entsprechen häufigen Äußerungen des jeweiligen Gesprächspartners die Genauigkeit der Erkennung der Sprache iterativ gesteigert werden.

Ein anderes Verfahren zur Erkennung der Sprache kann darin bestehen, dass man zunächst die vorab eingestellte Sprache des Spracherkennungssystems beibehält und versucht, den Sprachdaten bzw. Äußerungen des Gesprächspartners Wörter aus dem Wortschatz der betreffenden Sprache zuzuordnen. Sollte die Anzahl von erkannten und zugeordneten Wörtern zu gering sein, d.h. unter einer voreinstellbaren Schwelle liegen, wird der Wortschatz einer oder mehrerer anderen Sprachen zugrunde gelegt. Diejenige Sprache, bei deren Wortschatz die meisten Wörter erkannt und zugeordnet werden können, wird dann als die wahrscheinlichste Sprache ausgewählt und der weiteren Spracherkennung zugrunde gelegt.

Wie bereits erwähnt, ist bekannt, dass automatische Gesprächsannahmesysteme eingesetzt werden können, wenn der erwartete Gesprächsinformationsfluss weitgehend vorbestimmt ist, wenn also ein Gesprächspartner beispielsweise eine Antwort auf eine Frage - ja oder nein, eine Zahl zwischen 1 und 5 etc. - dem Gesprächsannahmesystem mitteilt. In diesem Fall können die Sprachdaten vom Spracherkennungssystem mit einer hohen Erfolgsrate richtig erkannt werden und die entsprechenden Informationen können zur weiteren Verarbeitung gespeichert werden.

Für komplexere Gespräche ist erfindungsgemäß weiter erkannt worden, dass anstelle eines Gesprächsannahmesystems ein zweiter Gesprächspartner erforderlich ist, um einen Informationsaustausch garantieren zu können, der nicht durch fehlerbehaftete Spracherkennungssysteme verfälscht wird. Insoweit ist jedoch vorgesehen, dass dem zweiten Gesprächspartner Hilfestellungen zur Verfügung gestellt werden, die ihm das mühsame und zeitaufwendige Eingeben oder Aufnehmen von Daten erleichtern bzw. abnehmen. Hierzu werden die Sprachdaten des Gesprächs des ersten und des oder jeden zweiten Gesprächspartners einem Spracherkennungssystem zugeführt. Es ist auch denkbar, dass die Sprachdaten lediglich des ersten Gesprächspartners dem Spracherkennungssystem zugeführt werden. Das Spracherkennungssystem führt nun mindestens für eine Untermenge der Sprachdaten - z. B. die Sprachdaten lediglich eines Gesprächspartners, ganz allgemein für alle Sprachdaten-die Spracherkennung durch. Selbst wenn diese nur teilweise erfolgreich ist, können die hieraus extrahierbaren Informationen einem Gesprächspartner zur Verfügung gestellt werden. Hierdurch können zumindest nahezu fehlerfrei einfache Daten wie Zahlen oder kurze Antworten auf Fragen vom Spracherkennungssystem erkannt werden, die dem Gesprächspartner sodann in einer speicherbaren Form vorliegen.

Es kann jedoch auch für komplexere Gespräche das Gespräch zunächst von einem automatischen Gesprächsannahmesystem entgegengenommen werden, welches das Gespräch dann eine den oder jeden zweiten Gesprächspartner weiterleitet oder diesen hinzuschaltet. Ebenso kann das Gespräch von dem automatischen Gesprächsannahmesystem hergestellt werden, indem dieses System so eingestellt ist, dass es Personen anhand einer vordefinierten Liste (z.B. Telefonbuch) automatisch per Telefon anwählt und anschließend den oder jeden zweiten Gesprächspartner hinzuschaltet oder das Gespräch an diesen weiterleitet. So könnten beispielsweise einfache Meinungsumfragen automatisch erstellt werden.

Bevorzugt ist das Spracherkennungssystem in das automatische Gesprächsannahmesystem integriert.

Falls ein Gesprächsannahmesystem eingesetzt wird, ist vorgesehen, dass das Gesprächsannahmesystem als ein "Interactive Voice Response System" (IVRS) arbeitet. Ein solches IVRS-System ist in der Lage, mit einem Gesprächspartner - wenn auch in eingeschränktem Rahmen - zu kommunizieren und in Abhängigkeit seiner Spracheingabe entsprechend zur reagieren. Vorzugsweise ist ein automatisch arbeitendes IVRS-System vorgesehen.

Eine hohe Erkennungsrate kann in besonders vorteilhafter Weise dann erzielt werden, wenn der Gesprächspartner, dessen Sprachdaten zu analysieren sind, mit vorgegebenen Gesprächsstrukturen konfrontiert wird. Dies können Erklärungen und/oder Fragen des Gesprächsannahmesystems bzw. des zweiten Gesprächspartners sein, die in dieser Weise dem Spracherkennungssystem schon bekannt sind. Auf die gezielten Fragen bzw. die vorgegebenen Gesprächsstrukturen wird dann sehr wahrscheinlich der damit konfrontierte Gesprächspartner in der Regel "erwartungsgemäß" reagieren, so dass aus dieser erwartungsgemäßen Reaktion die darin enthaltene Information mit hoher Wahrscheinlichkeit richtig erkannt und dementsprechend extrahiert bzw. abgespeichert werden kann. Insoweit könnte hier in besonders vorteilhafter Weise zur Spracherkennung die Methode der Grammatikerkennung eingesetzt werden.

Zur praktischen Realisierung eines Gesprächsannahmesystems und/oder eines Spracherkennungssystems ist vorgesehen, dass mindestens ein Computer eingesetzt wird. Hierbei kann es sich bei dem Gesprächsannahmesystem und bei dem Spracherkennungssystem um ein und denselben Computer handeln. In bevorzugter Ausgestaltung ist jedoch vorgesehen, dass lediglich ein Computer als Gesprächsannahmesystem eingesetzt wird. Die Sprachdaten des Gesprächs werden dann einem anderen Computer zugeleitet, auf dem das Spracherkennungssystem implementiert ist. Ein solcher Computer sollte hinreichende Leistungsdaten aufweisen. Darüber hinaus weist ein als Gesprächsannahmesystem eingesetzter Computer eine Schnittstelle zum Aufbauen einer Telefon- und/oder Videoverbindung auf. Eine weitere Schnittstelle ist vorgesehen, über die Sprach- bzw. und Videodaten ein- bzw. ausgegeben zu werden.

Die Spracherkennung selbst könnte auf einem oder auf mehreren Computern ausgeführt werden. Insbesondere bei zeitkritischen Anwendungen wird die Spracherkennung vorzugsweise auf mehreren Computern vorzugsweise parallel ausgeführt. So könnte beispielsweise der Spracherkennungsprozess in mehrere Teilprozesse aufgeteilt werden, wobei jeder Teilprozess auf einem Computer ausgeführt wird. Bei der Unterteilung in Teilprozesse könnten jedem Teilprozess einzelne Sätze oder Nebensätze zugeordnet werden, eine zeitliche Aufteilung der Sprachdaten - beispielsweise in Zeitintervalle von jeweils 5 Sekunden - wäre ebenfalls denkbar. Falls der Computer mehrere Prozessoren (CPUs) aufweist, könnten die Teilprozesse auf die Prozessoren des Computers verteilt parallel ausgeführt werden.

Falls die Rechenleistung eines einzelnen Computers zur Spracherkennung und/oder für das Gesprächsannahmesystem nicht ausreicht, könnte ein Computer-Netzwerksystem vorgesehen sein, so dass diese Aufgaben auf mehreren Computern parallel ausführt werden. Insbesondere könnten einzelne Computer des Netzwerksystems spezielle, unterschiedliche Spracherkennungsmodi ausführen, so dass jeder Computer die gleichen Sprachdaten unter einem anderen Gesichtspunkt analysiert.

Insbesondere bei der Auswertung von Sprachdaten, die von einem Gesprächsannahmesystem aufgezeichnet worden sind, könnte eine Spracherkennung individuell auf einen Analyseauftrag ausgerichtet sein. So könnte beispielsweise eine Zuschauerumfrage oder ein Zuhörerquiz einer Fernseh- oder Radiosendung automatisch dahingehend ausgewertet werden, welche politische Maßnahme beispielsweise bei den Zuschauern bzw. in der Zuhörerschaft eine höhere Akzeptanz hat. Hierbei könnte als Analyseauftrag beispielsweise vorgegeben sein, herauszufinden, ob Maßnahme A oder Maßnahme B bevorzugt wird, so dass die Information und die Kenntnis der möglichen Varianten der Umfrage bei der Spracherkennung berücksichtigt bzw. der Spracherkennung als zusätzliche Information zur Verfügung gestellt werden.

Falls die Sprachdaten von einem Gespräch zwischen zwei Gesprächspartnern stammen, ist in ganz besonders bevorzugter Weise vorgesehen, dass die Spracherkennung individuell auf einen Analyseauftrag ausgerichtet wird. Dieser könnte beispielsweise die Spracherkennung der Sprachdaten hauptsächlich von einem der beteiligten Gesprächspartner umfassen, wobei die Analyse hierbei beispielsweise speziell auf die Erkennung der Telefonnummer des einen Anrufers oder Ähnliches gerichtet sein kann.

Als Methoden zur Spracherkennung sind die Diktat-, Grammatik-, Einzelworterkennung und/oder das Keyword-Spotting vorgesehen. Hierbei könnte beispielsweise in Abhängigkeit des aktuellen Gesprächszustands von der einen Spracherkennungsmethode auf die andere Spracherkennungsmethode umgeschaltet werden, wenn absehbar ist, dass eine andere Spracherkennungsmethode für den aktuellen Gesprächszustand die besseren Ergebnisse bei der Spracherkennung verspricht. Vorzugsweise könnten die unterschiedlichen Methoden der Spracherkennung auch parallel eingesetzt werden, was beispielsweise auf mehrere Computer parallel verteilt durchgeführt wird.

Ganz besonders bevorzugt ist vorgesehen, die Spracherkennung wiederholt auszuführen. Hierzu ist es möglich, die Sprachdaten bzw. die zumindest weitgehend unverändert gespeicherten Sprachdaten eines Gesprächs wiederholt unterschiedlichen oder gleichen Spracherkennungsprozessen zuzuführen. Eine wiederholte Spracherkennung ist insbesondere bei einem Offline-Erkennungssystem vorgesehen, da hier eine Zeitverzögerung der Spracherkennung möglich ist.

Für eine weitere Spracherkennungsstrategie ist vorgesehen, eine dynamische Anpassung der Spracherkennung vorzunehmen. Hierbei könnte beispielsweise das Vokabular zur Spracherkennung variiert und/oder angepasst werden. So könnte eine zunächst eingesetzte Spracherkennungsmethode - beispielsweise die Diktaterkennung-eine geringe Erkennungsrate ergeben, so dass abzusehen ist, dass die Beibehaltung der Diktaterkennung nur wenig Aussicht auf Erfolg haben wird. Sodann ist vorgesehen, dynamisch eine andere Spracherkennungsmethode einzusetzen, wobei auch bei der neu eingesetzten Sprachmethode sofort die Erkennungsrate analysiert wird und gegebenenfalls ein weiterer dynamischer Spracherkennungsschritt folgt. Hierbei könnte auch vorgesehen sein, auf mehreren Computern parallel die gleiche Spracherkennungsmethode auf die Sprachdaten anzuwenden, jedoch wird auf jedem Computer ein anderes Vokabular zur Spracherkennung eingesetzt. Eine unmittelbare Analyse der Erkennungsrate dieser parallel verlaufenden Spracherkennungsprozesse kann eine dynamische Anpassung bzw. Steuerung der weiteren Spracherkennung zur Folge haben.

Zusätzlich oder alternativ ist ein ganz besonders bevorzugter Verfahrensschritt vorgesehen, der unter dem Oberbegriff "Vokabulardynamisierung" zusammengefasst werden kann. Hierbei werden die Sprachdaten mehrmals analysiert. In einem ersten Erkennungsschritt werden die Sprachdaten klassifiziert. Hierzu könnten beispielsweise Methoden des Keyword-Spotting eingesetzt werden. In Abhängigkeit des Ergebnisses der Sprachdatenklassifizierung werden die Sprachdaten in einem weiteren Erkennungsschritt unter Hinzuziehung von speziellem Vokabular erneut untersucht. Hierbei wird dem Erkennungsvorgang ein Vokabular zugrundegelegt, das in direktem oder im näheren Zusammenhang mit dem Ergebnis des Sprachdatenklassifizierungsschritts liegt. Hierbei ist es durchaus denkbar, dass dem Erkennungsschritt der Sprachdaten ein Vokabular aus mehreren speziellen Bereichen zugrundegelegt wird. Dieser weitere Erkennungsschritt wird vorzugsweise auf die ursprünglichen Sprachdaten angewandt, wobei jedoch die im ersten Erkennungsschritt gewonnenen Informationen hinzugezogen werden können. Demgemäss werden die Verfahrensschritte der Vokabulardynamisierung immer wieder auf die ursprünglichen Sprachdaten angewandt.

In einer bevorzugten Ausführungsform des erfindungsgemässen Verfahrens wird das Gespräch automatisch an eine für die betreffende Sprache vorgesehene Annahmestelle weitergeleitet. Während der Weiterleitung oder bei Nichtverfügbarkeit von Annahmestellen kann der Gesprächspartner mit Hilfe von Sprachprompts, das sind vorab oder automatisch erzeugte Informationssequenzen, automatisch informiert werden. In einer weiteren bevorzugten Ausführungsform läuft der Erkennungsvorgang der Sprache im Hintergrund ab.

In einer weiteren bevorzugten Ausführungsform werden die Sprachdaten nicht nur in textuelle Information umgewandelt, sondern auch einer Frequenzanalyse unterzogen. Die erhaltenen Spektren können zeitnah, d.h. online aufgenommen und ebenso zeitnah auf einem Anzeigegerät wie einem Bildschirm ausgegeben und damit einem Gesprächspartner zur Verfügung gestellt werden. Bevorzugt werden einzelnen Wörtern des erkannten Textes einzelne zeitliche Abschnitte der Frequenzanalyse bzw. einzelne Spektren zugeordnet und/oder abgespeichert. Ebenso können einzelne Spektren gespeichert und den betreffenden Wörtern zugeordnet werden. Weiter bevorzugt werden bekannte Daten des Anrufers solchen Spektren zugeordnet. Vergleicht man dann bei gleichen Wörtern die Spektren von unterschiedlichen Anrufen, so kann ermittelt werden, ob die betreffenden Gesprächspartner identisch sind. Entsprechend kann auch die Identität eines Anrufers, der sich nicht namentlich zu erkennen gibt, ermittelt werden, wenn ein Spektrum eines aus dem Gespräch gefallenen Wortes mit einer bereits vorhandenen "Kartei" verglichen wird - sofern der Gesprächspartner bereits einmal identifiziert wurde.

Ein weiterer Vorteil der Frequenzanalyse besteht darin, dass die subjektive Stimmung eines Gesprächspartners erkannt werden kann. Dies kann beispielsweise dergestalt durchgeführt werden, dass das Spektrum eines bestimmten Wortes bei unterschiedlichen Stimmungen des jeweils Sprechenden aufgenommen und gespeichert wird. Dies kann beispielsweise in Vorversuchen oder bei bekannter Stimmung eines bekannten Gesprächspartner durchgeführt werden. Aus dem Vergleich der gespeicherten Spektren mit einem Spektrum des aktuell Gesprochenen kann dann auf die aktuelle Stimmung des Sprechenden geschlossen werden. Dies kann insbesondere bei Verkaufsgesprächen oder bei Vertragsverhandlungen nützlich sein. Zum einen, wenn es dem jeweils anderen Gesprächspartner online gezeigt wird, zum anderen in der Nachbereitung, wenn man das Gespräch anhand der gespeicherten Daten (Wörter und zugehörige Spektren) im Nachhinein analysiert.

In weiter bevorzugter Ausführungsform kann bei einer bestimmten erkannten Stimmung eines Gesprächspartners eine bestimmte Aktion eines Gesprächsannahmesystems automatisch bzw. programmgesteuert initiiert werden. Beispielsweise kann erkannter schlechter Stimmung eines Gesprächspartners automatisch eine bestimmte Musik eingespielt werden, die auf eine Verbesserung der Stimmung des Gesprächspartners hinwirkt. Die erkannte Stimmung kann weiter dem Gespräch bei der Speicherung als Klassifikation zugeordnet werden. Dies kann bei einer statistischen Auswertung bei einer Vielzahl von Gesprächen vorteilhaft sein.

In einer bevorzugten Ausführungsform folgt auf die Umwandlung der Sprachdaten in Text, d.h. in orthographische bzw. textuelle Information, in einem weiteren, zusätzlichen Schritt die Untersuchung des erhaltenen Textes auf Schlüsselwörter. Anschließend wird dem Gespräch anhand der erkannten Schlüsselwörter eine Klassifikation zugeteilt. Diese Verfahrensschritte können beispielsweise dadurch umgesetzt werden, dass der Text auf Schlüsselwörter wie "Fehler", "beschweren", "zurückgeben" oder ähnliches durchsucht wird. Falls eines oder mehrere dieser Wörter gefunden wird, kann dem Gespräch ein Klassifikation wie "Beschwerde" zugeordnet werden.

Schlüsselwörter und zugehörige Klassifikation können in einer oder mehreren Tabellen gespeichert und einander zugeordnet sein, beispielsweise auf die Weise, dass in einer Spalte einer Tabelle mit dem Namen "Beschwerde" die oben genannten Schlüsselwörter in den Zeilen darunter angeordnet sind. Es können aber auch die Schlüsselwörter in einer Datei mit dem Namen der betreffenden Klassifikation abgespeichert sein. In bevorzugter Ausführungsform ist die Klassifikation auf den Zweck des Anrufs gerichtet. Beispiele hierfür sind: Information, Beschwerde, Problem, Produkt X, ... . Für diese Klassifikationen geeignete Schlüsselwörter ergeben sich für den Fachmann von selbst. Geeignete Schlüsselwörter können auch aufgrund von Versuchen oder von Auswertungen bereits gespeicherter Gespräche leicht ermittelt werden. Zusätzlich oder alternativ kann die Klassifikation auch auf die Stimmung des Gesprächspartners gerichtet sein. Werden in einem Beschwerdegespräch über eine erfolgte Lieferung einer Sache Schlüsselwörter wie "Schrott" und "unzumutbar" gefunden, kann das Gespräch beispielsweise der Klassifikation "gereizt" zugeordnet werden. Die genannten Beispiele sollen lediglich als Anhaltpunkt dienen. Der Anwender kann sich für seinen Bedarf, der am seinem jeweiligen Geschäftszweck angelehnt ist, seine eigenen Wortkombinationen leicht selbst zusammenstellen. Die Klassifikation wir vorteilhafterweise zusammen mit dem Gesprächstext gespeichert. Alternativ kann auch eine Verknüpfung des gespeicherten Gesprächs mit der ebenfalls gespeicherten Klassifikation erfolgen.
Über eine derartige Klassifikation können beispielsweise Gespräche, die ein bestimmtes Produkt X, betreffen statistisch ausgewertet werden. Dies kann dem Hersteller helfen, seine Produktqualität zu verbessern oder besser auf Kundenwünsche einzugehen.

In einer weiteren bevorzugten Ausführungsform des erfindungsgemäßen Verfahrens erfolgt ein Abspeichern des erkannten Textes mit zugeordnetem zeitlichen Verlauf. Dies hat unter anderem den Vorteil, dass für die Aufzeichnung von Gesprächen auf Datenträgern für Datenverarbeitungsanlagen nun weniger Speicherplatz erforderlich ist als notwendig wäre, wenn das Gespräch akustisch aufgezeichnet werden sollte, beispielsweise als "wav-Datei". Würde ein Gespräch als eine derartige Datei gespeichert werden, würden pro Minute Gesprächsdauer etwa 8 MByte gebraucht werden. Wird das Gespräch erfindungsgemäß in Text gewandelt und gespeichert, benötigt das gleiche Gespräch nur einige KByte.

Aus der gespeicherten Zeitlichen Abfolge des Gesprächs ist ersichtlich, was zu welchem Zeitpunkt gesprochen wurde. Daraus kann dann der Inhalt und die Bedeutung der einzelnen Gesprächsabschnitte im Nachhinein besser und genauer ermittelt werden.

In einer besonderen Ausführungsform wird der erkannte Text dem jeweiligen Gesprächspartner zugeordnet werden. Dies kann beispielsweise dadurch geschehen, dass man die Stimmen mit Hilfe einer Frequenzanalyse analysiert, daraus Charakteristika für den jeweiligen Gesprächspartner ermittelt und über diese Charakteristika eine Zuordnung der gesprochenen und erkannten Wörter zu dem jeweiligen Gesprächspartner vornimmt. Unterstützend oder alternativ dazu kann eine Zuordnung auch anhand von Schlüsselworten, beispielsweise Namen, erfolgen.

In einer weiteren bevorzugten Ausführungsform kann die zeitliche Abfolge der erkannten Wörter auf einem Bildschirm graphisch dargestellt werden. Dies kann beispielsweise auf die Weise erfolgen, dass die erkannten Wörter auf einer Zeitskala angeordnet sind. Ist die Zahl der Wörter zu groß um noch übersichtlich dargestellt zu werden, können lediglich einzelne Schlüsselwörter, die in einer vorab eingerichteten Tabelle definiert sein können, auf der Zeitskala angeordnet sein. Die graphische Darstellung kann auf einem Computer so implementiert sein, dass durch anwählen von einzelnen Schlüsselwörtern der vollständige, zu einem vorwählbaren Zeitabschnitt gehörige Text dargestellt wird. Dies führt vor allem bei längeren Gesprächen zu einer erheblichen Zeiteinsparung. Dies kann online oder zeitversetzt erfolgen. Eine Online-Darstellung hat den Vorteil, dass der betreffende (zweite) Gesprächspartner sich während des Gesprächs über das bereits Gesprochene informieren kann.

Im folgenden werden iterativ weitere Erkennungsschritte durchgeführt, die im Idealfall zur vollständigen Erkennung der gesamten Sprachdaten oder zumindest einer Untermenge der Sprachdaten führt. Die weiteren iterativen Erkennungsschritte werden vorzugsweise über Erkennungswahrscheinlichkeiten gesteuert, so dass hierdurch beispielsweise ein Abbruchkriterium für weitere Erkennungsschritte gegeben sein kann, wenn z. B. sich die Erkennungswahrscheinlichkeit nicht mehr ändert.

Aus Sicherheitsgründen können die Sprachdaten des Gesprächs selbstverständlich weitgehend unverändert gespeichert werden. Das Abspeichern könnte hierbei sämtliche Sprachdaten des Gesprächs umfassen. Falls beispielsweise ein Gesprächspartner oder das Gesprächsannahmesystem vorgegebene, dem Spracherkennungssystem bekannte Gesprächsstrukturen verwendet, könnten lediglich die Sprachdaten des anderen Gesprächspartners abgespeichert werden. Grundsätzlich kann bei dem Speichervorgang vorgesehen sein, zusätzlich zu den Sprachdaten Marker bzw. Bookmarks abzuspeichern, so dass das abzuspeichernde Gespräch hierdurch sinnzusammenhängend oder logisch unterteilt wird. Diese Unterteilung könnte bei einer nachfolgenden Sprachdatenerkennung den Vorgang der Informationsextraktion beschleunigen oder vereinfachen. Weiterhin kann vorgesehen sein, dass Informationen über den aktuellen Gesprächszustand bei der Spracherkennung berücksichtigt werden. So könnte beispielsweise zu Beginn des Gesprächs der Umstand berücksichtigt werden, dass die beiden Gesprächspartner sich gegenseitig identifizieren, so dass eine Spracherkennung hierzu entsprechende Vokabel- bzw. Grammatikerkennungsmodi einsetzt. Diese Informationen über den aktuellen Gesprächszustand, wie auch immer diese gewonnen werden, könnten ebenfalls zusammen mit den -Sprachdaten gespeichert werden.

In ganz besonders bevorzugter Weise ist vorgesehen, dass das Spracherkennungssystem und/oder der Spracherkennungsvorgang mit einem Datenbanksystem, wie z.B. R/3® (SAP Aktiengesellschaft, D-69190 Walldorf)und/oder Expertensystem gekoppelt wird. Hierdurch können die Ergebnisse oder die Teilergebnisse des Spracherkennungsvorgangs direkt in ein Datenbank und/oder Expertensystem eingegeben werden. Weiterhin können Informationen aus dem Datenbank- und/oder Expertensystem zum Spracherkennungsvorgang hinzugezogen werden, beispielsweise zur Vokabulardynamisierung. So können durch diese Kopplung weitergehende Informationen extrahiert werden, die - wie bereits angedeutet - zur Spracherkennung genutzt werden.

Die aus dem Datenbank- und/oder Expertensystem gewonnen Informationen können zur Steuerung des dynamischen Erkennungsvorgangs der Spracherkennung eingesetzt werden. So könnten beispielsweise Informationen, die in einem Datenbank- bzw. R/3®-System über einen Gesprächspartner abgelegt sind, den Erkennungsvorgang der von diesem Gesprächspartner vorliegenden Sprachdaten dahingehend zur Steuerung eingesetzt werden, dass zur Spracherkennung Vokabular zugrundegelegt wird, das bereits in vorangegangenen Gesprächen mit diesem Gesprächspartner eingesetzt wurde. Hierbei können auch die während dem aktuellen Gespräch erkannten Sprachdaten in das Datenbank- bzw. R/3®-System oder in eine entsprechende Datenbank abgespeichert werden und - schon während des Gesprächs - den Vokabelschatz dieses Gesprächspartners bei der Spracherkennung dynamisch erweitern.

Nun ist grundsätzlich vorgesehen, die insbesondere aus der Sprachdatenerkennung gewonnenen Informationen zu speichern. In ganz besonderes bevorzugter Weise ist zusätzlich oder alternativ hierzu vorgesehen, Informationen in Form einer grafischen und/oder orthographischen Repräsentation zur Verfügung zu stellen. Dies kann für Informationen vorgesehen sein, die gegebenenfalls zeitversetzt von einem mit einem Gesprächsannahmesystem aufgezeichneten Gespräch stammen. Dies könnte allerdings auch für Informationen einer Spracherkennung von Gesprächsdaten zutreffen, die von einem Gespräch zwischen zwei oder mehreren Gesprächspartnern stammen. Hierbei können entweder alle Informationen des Gesprächs, d.h. sozusagen jedes Wort, oder lediglich extrahierte und/oder selektierte Informationen hieraus, die für die jeweilige Anwendung des erfindungsgemäßen Verfahrens gerade zweckmäßig sind, angezeigt werden. Das zur Verfügung Stellen der Informationen könnte beispielsweise auf einer Ausgabeeinheit eines Computers, z. B. eines Monitors, auf einem Bildschirm oder Fernseher erfolgen. Auch die Ausgabe der Informationen auf einem Handy-Display könnte vorgesehen sein.

Ganz allgemein ist vorgesehen, die Informationen zeitversetzt zur Verfügung zu stellen. Dies wird insbesondere bei Gesprächsinformationen der Fall sein, die von einem Gesprächsannahmesystem stammen, wo also eine zeitgleiche Spracherkennung bzw. Informationsauswertung nicht erforderlich ist. Alternativ hierzu ist in bevorzugter Weise vorgesehen, die Informationen nahezu zeitgleich, d.h. "Online" zu erkennen und/oder dem Gesprächspartner zur Verfügung zu stellen. Dies ist insbesondere dann der Fall, wenn Sprachdaten eines Gesprächs zwischen zwei Gesprächspartnern erkannt bzw. analysiert werden. Hierbei können die Informationen entweder einem oder beiden bzw. allen Gesprächspartnern zur Verfügung gestellt werden, je nach dem welches Ziel die Anwendung des erfindungsgemäßen Verfahrens verfolgt. Das Online zur Verfügung Stellen der Informationen könnte allerdings auch in Verbindung mit einem Gesprächsannahmesystem erfolgen, beispielsweise wenn bei einer Rundfunk- oder Fernsehsendung eine "Live-Umfrage" nach nur kurzer Zeit ausgewertet sein muss.

Nun könnte der Gesprächspartner, dem die Informationen während des Gesprächs zur Verfügung gestellt werden (der oder jede zweite Gesprächspartner), die Spracherkennung zumindest teilweise vorgeben, steuern und/oder lenken. Hierzu könnten auf einer grafischen Benutzeroberfläche eines entsprechenden Computers bzw. Steuerrechners entsprechende Symbole vorgesehen sein, die unterschiedliche Wirkungen auf die Spracherkennung haben und einfach und schnell vom dem Gesprächspartner betätigt werden können. Insbesondere könnte hierbei vorgesehen sein, dass der Gesprächspartner entsprechende Symbole betätigen kann, die mehrere, vom Spracherkennungssystem kommende Ergebnisse als richtig oder falsch klassifizieren bzw. auswählen können. Letztendlich kann so der eine Gesprächspartner hierdurch das Erkennungssystem auf die Stimme des anderen Gesprächspartners schulen, so dass bei einem länger andauernden Gespräch das Spracherkennungssystem zumindest weitgehend die Sprachdaten des anderen Gesprächspartners erkennen kann. Weiterhin können entsprechende Symbole vorgesehen sein, die eine Annahme oder Ablehnung von abzuspeichernden Informationen als Ergebnis der Spracherkennung zur Folge haben.

Weiterhin könnte beispielsweise vorgesehen sein, dass der Gesprächspartner das Vokabular für die Spracherkennung, oder die Reihenfolge der Anwendung der unterschiedlichen Spracherkennungsmethoden vorgibt.

Insbesondere bei einer Kopplung des Spracherkennungssystems mit einem Datenbank- und/oder Expertensystem könnte vorgesehen sein, dass für jeden Gesprächspartner ein Benutzerprofil angelegt oder schon abgespeichert ist. Zur Spracherkennung eines weiteren Gesprächs mit diesem Gesprächspartner könnte dieses Benutzerprofil automatisch geladen werden. Darüber hinaus ist auch denkbar, dass der Gesprächspartner, dem die Informationen zur Verfügung gestellt werden, dieses Benutzerprofil lädt. In einem Benutzerprofil kann insbesondere der Erkennungsmodus der Spracherkennung, ein spezieller Vokabularschatz oder ähnliches abgespeichert sein.

In besonders bevorzugter Weise werden neben den extrahierten Sprachinformationen noch Informationen des Datenbank- und/oder Expertensystems extrahiert zur Verfügung gestellt. Diese Vorgehensweise könnte beispielsweise im Einsatz eines Call-Centers angewandt werden. Hierbei ist der das Gespräch entgegennehmende Gesprächspartner, im folgenden Agent genannt, derjenige, dem die extrahierten Informationen zur Verfügung gestellt werden. So können dem Agent neben den erkannten und extrahierten Informationen aus dem Spracherkennungsprozess auch weitergehende Informationen, beispielsweise über den Anrufer, dessen Tätigkeitsfeld u.s.w. ebenfalls zur Verfügung gestellt werden, so dass in besonders vorteilhafter Weise der Agent noch vor Beendigung des Gesprächs mehr Informationen erhält, als eigentlich in dem Gespräch ausgetauscht wurden. Hierdurch kann der Agent auch andere Themengebiete ansprechen, die nicht vom Anrufer aus angesprochen sind, wodurch dem Anrufer in besonders vorteilhafter Weise das Gefühl vermittelt wird, dass der Agent des Call-Centers den Anrufer nebst seinem Tätigkeitsgebiet persönlich kennt. Durch diese Vorgehensweise kann auch in vorteilhafter Weise eine Beratung des Anrufers intensiver und/oder effektiver durchgeführt werden.

Zur einfachen Bedienung durch einen Gesprächspartner könnten die entsprechenden Ausgabemodule für die extrahierten Informationen und/oder die Symbole für die Steuerung bzw. Lenkung der Spracherkennung in eine Gesamtoberfläche und/oder in ein Gesamtprogramm eines Computerprogramms eingebunden sein. Hierdurch hat beispielsweise ein Agent eines Call-Centers lediglich eine zentrale Anwendung bzw. ein zentrales Programm zu bedienen, so dass letztendlich auch hierdurch die Effizienz des Gesamtsystems erhöht wird.

Das erfindungsgemäße Verfahren könnte in weiter vorteilhafter Weise zum Schulen von Agenten eines Call-Centers eingesetzt werden. So könnte beispielsweise gerade aufgrund der Informationen, die über einen Anrufer in einem Datenbankund/oder Expertensystem gespeichert sind, die Gesprächsstrategie des Agenten geschult werden. Ein Ziel hierbei könnte beispielsweise sein, dass der Agent eines Call-Centers einerseits lernt ein erfolgreiches Verkaufsgespräch mit einem Anrufer zu absolvieren und andererseits wichtige Daten über den Anrufer - entweder bereits gespeicherte oder in dem Gespräch gewonnene Informationen - dem Gesamtsystem zuzuführen oder in dem Gesamtsystem abzuspeichern, so dass auch die Schnelligkeit eines Agenten eines Call-Centers in der Gesprächsabwicklung geschult werden kann.

In ganz besonders vorteilhafter Weise wird das Spracherkennungssystem auf die Stimme eines Gesprächspartners trainiert. Im Fall eines Call-Centers ist dies der Agent des Call-Centers, der praktisch bei jedem Gespräch mit dem Spracherkennungssystem interagiert. Somit können zumindest die Sprachdaten des einen Gesprächspartners bzw. des Agents mit einer optimierten Erkennungsrate erkannt und/oder analysiert werden. Die Erkennungsrate des Spracherkennungssystems kann in weiter vorteilhafter Weise auch dadurch gesteigert werden, dass der eine Gesprächspartner bzw. der Agent des Call-Centers einzelne, für den Gesprächspartner bzw. Agent wichtige Worte wiederholt. Somit kann das Spracherkennungssystem diese nunmehr vom Gesprächspartner, auf den das Spracherkennungssystem trainiert ist, mit einer hohen Erkennungsrate richtig erkannt bzw. analysiert werden.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung der bevorzugten Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: eine schematische Darstellung einer ersten Konfiguration zur Durchführung des erfindungsgemäßen Verfahrens,
- Fig. 2: eine schematische Darstellung einer zweiten Konfiguration zur Durchführung des erfindungsgemäßen Verfahrens,
- Fig. 3: eine schematische Darstellung eines Ausführungsbeispiels eines Spracherkennungssystems und
- Fig. 4: eine schematische Darstellung einer weiteren Konfiguration zur Durchführung des erfindungsgemäßen Verfahrens.

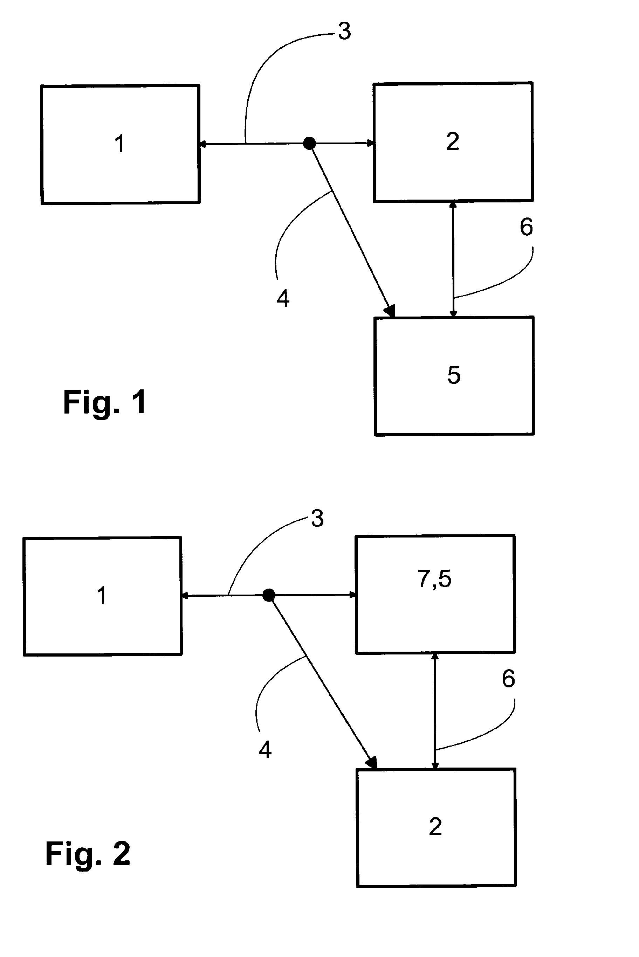

Fig. 1 zeigt schematisch einen ersten Gesprächspartner 1 und einen zweiten Gesprächspartner 2, wobei die beiden Gesprächspartner 1, 2 ein Telefongespräch führen. Die Telefonverbindung ist mit dem Bezugszeichen 3 angedeutet. Sprachdaten des Gesprächs wird über die Verbindung 4 einem Spracherkennungssystem 5 zugeführt.

Erfindungsgemäß wird zumindest eine Untermenge der Sprachdaten erkannt und extrahiert. Das Ergebnis der Spracherkennung wird dem zweiten Gesprächspartner 2 über Verbindung 6 zur Verfügung gestellt. Die Verbindung 6 kann beispielsweise auch eine Sichtverbindung zu einem Bildschirm sein.

In Fig. 2 ist eine erfindungsgemäße Konfiguration gezeigt, bei der ein Gesprächspartner 1 mit einem Gesprächsannahmesysteme 7 über eine Telefonverbindung 3 telefoniert, bzw. telefoniert hat, und das Gesprächsannahmesystem 7 das Gespräch ein einen zweiten Gesprächspartner 2 weitergeleitet hat. Das Gesprächsannahmesystem 7 ist hierbei als ein automatisches Interactive Voice Response System ausgeführt. Die Spracherkennung 5 sowie die Speicherung einerseits der Sprachdaten und andererseits der hieraus extrahierten Informationen ist ebenfalls in dem Gesprächsannahmesystem 7 vorgesehen. Das Gesprächsannahmesystem 7 ist ein Computer.

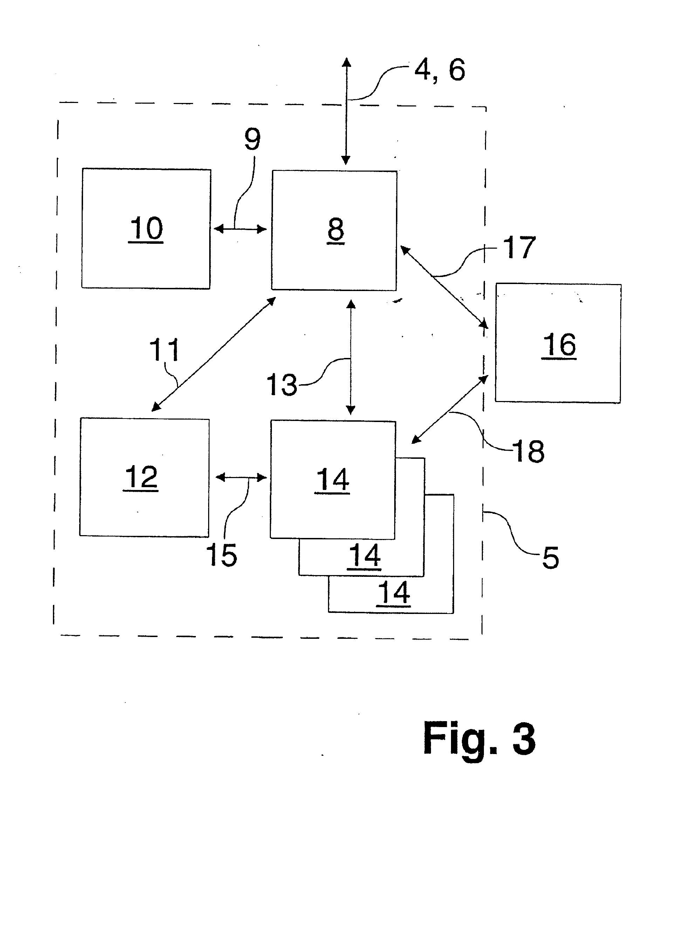

Bei dem Spracherkennungssystem 5 kann es sich auch um mehrere Computer handeln, wie in Fig. 3 schematisch gezeigt wird. Im Konkreten handelt es sich um ein Computer-Netzwerksystem, auf dem die Spracherkennung parallel ausgeführt wird. Die Sprachdaten werden über die Verbindung 4 dem Spracherkennungssystem 5 zugeführt. Die Sprachdaten werden von dem Eingangs-/Ausgangsserver 8 über das Netzwerk weiterverteilt.

So werden die Sprachdaten über Verbindung 9 einem Datenspeicher 10 zugeführt. Weiterhin werden die Sprachdaten über Verbindung 11 dem Baseform-Server 12 sowie über Verbindung 13 den drei Recognition-Servern 14 zugeführt. Der Baseform-Server 12 dient hierbei zur Bereitstellung der erforderlichen phonetischen Aussprachetranskriptionen. Über Verbindung 15 ist ebenfalls ein Sprachdatenaustausch zwischen Baseform-Server 12 und den drei Recognition-Servern 14 vorgesehen.

Die Spracherkennung auf den Recognition-Servern 14 wird hierbei parallel ausgeführt, und zwar führt einer der drei Recognition-Server 14 eine Diktaterkennung, der andere Recognition-Server 14 eine Grammatikerkennung und schließlich der dritte Recognition-Server 14 eine Keyword-Spotting-Erkennung aus. Demgemäss werden die drei unterschiedlichen Methoden der Spracherkennung quasi parallel eingesetzt, die unterschiedlichen Spracherkennungsmethoden benötigen geringfügig unterschiedliche Rechenzeiten, so dass keine zeitgleiche Parallelisierung im strengen Sinn vorliegt.

Falls die Spracherkennung wiederholt ausgeführt wird, werden die auf dem Datenspeicher 10 gespeicherten Original-Sprachdaten des Gesprächs von dem Eingangs/Ausgangsserver 8 angefordert und erneut auf den Baseform-Server 12 und die Recognition-Server 14 verteilt.

In vorteilhafter Weise ist das Spracherkennungssystem 5 sowie der Spracherkennungsvorgang mit einem Datenbanksystem 16 über die Verbindungen 17, 18 gekoppelt. Durch diese Kopplung werden weitergehende Informationen extrahiert. So werden die aus dem Datenbanksystem 16 gespeicherten und abgerufenen Informationen über den Gesprächspartner 1 dazu verwendet, den Spracherkennungsvorgang zu unterstützen. Hierzu wird dem Recognition-Server 14, auf dem die Diktaterkennung läuft, ein Vokabular zur Verfügung gestellt, das auf dem Datenbanksystem 16 gespeichert ist und im Rahmen eines vorherigen Gesprächs mit dem Gesprächspartner 1 in Verbindung gebracht wurde.

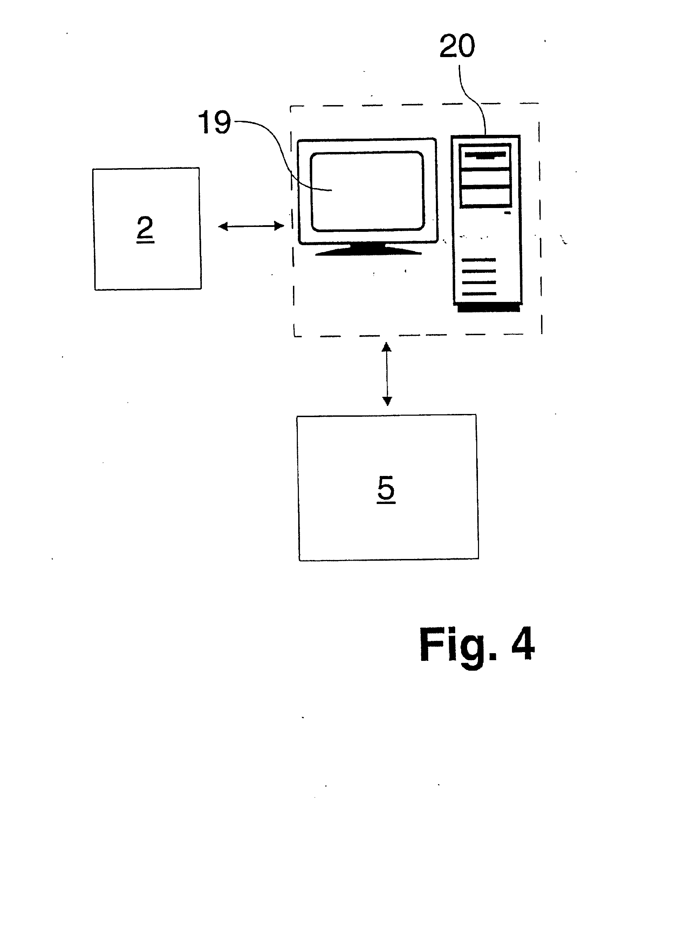

In Fig. 4 ist schematisch gezeigt, dass dem Gesprächspartner 2 die Informationen des Spracherkennungssystems 5 nebst den Informationen des Datenbanksystems in Form einer graphischen und orthographischen Repräsentation auf dem Monitor 19 des Computers 20 zur Verfügung gestellt werden. Die Repräsentation der Informationen erfolgt hierbei während des Gesprächs.

Der Gesprächspartner 2 kann ebenfalls über den Computer 20 bei dem Spracherkennungsvorgang eingreifen und diesen derart steuern, dass ein optimales Spracherkennungsergebnis erzielt werden kann. Sowohl die graphische und orthographische Repräsentation der extrahierten Sprachinformationen als auch die Steuerung des Spracherkennungsvorgangs erfolgt mit einer Benutzerschnittstelle, die auf dem Computer 20 nebst Monitor 19 dem Gesprächspartner 2 zur Verfügung steht. Hierdurch kann der als Agent eingesetzte Gesprächspartner 2 in einem Call-Center eine optimale Anruferberatung durchführen.

Abschließend sei ganz besonders darauf hingewiesen, dass die voranstehend erörterten Ausführungsbeispiele lediglich zur Beschreibung der beanspruchten Lehre dienen, diese jedoch nicht auf die Ausführungsbeispiele einschränken.

## Patentansprüche

1. Verfahren zur Behandlung von Sprachdaten aus einem Gespräch zwischen einem ersten menschlichen und einem oder mehreren zweiten menschlichen Gesprächspartnern und/oder einem Gesprächsannahmesystem oder zwischen einem ersten menschlichen und einem oder mehreren zweiten menschlichen Gesprächspartnern, bei dem aus dem Gespräch Sprachdaten erzeugt werden, **dadurch gekennzeichnet**,
- und dass die Sprache des ersten Gesprächspartners automatisch erkannt wird
- dass die Sprachdaten ganz oder teilweise mittels eines automatischen Spracherkennungssystems analysiert und in Text umgewandelt wird.

2. Verfahren nach Anspruch 1, wobei das Gespräch automatisch an eine für der erkannte Sprache vorgesehene Annahmestelle weitergeleitet wird.

3. Verfahren nach Anspruch 1 oder 2, wobei die Spracherkennung während eines Gesprächs im Hintergrund durchgeführt wird.

4. Verfahren nach Anspruch 2 oder 3, wobei der erste Gesprächspartner während der Weiterleitung oder bei Nichtverfügbarkeit von Annahmestellen mit Hilfe von Sprachprompts automatisch informiert wird.

5. Verfahren nach einem oder mehreren der Ansprüche 1 bis 4, wobei die Sprachdaten ganz oder teilweise einer Frequenzanalyse unterzogen werden.

6. Verfahren nach Anspruch 5, wobei der Text und eine graphische Darstellung von Ergebnissen der Frequenzanalyse auf einem Anzeigegerät ausgegeben wird.

7. Verfahren nach Anspruch 6, wobei die Ausgabe des Textes und der Ergebnisse der Frequenzanalyse online erfolgt.

8. Verfahren nach einem oder mehreren der Ansprüche 1 bis 7, wobei einzelne Wörter des Textes einzelnen zeitlichen Abschnitten der Frequenzanalyse zugeordnet werden.

9. Verfahren nach Anspruch 8, wobei mindestens die einzelnen Wörter und die zugeordneten Abschnitte der Frequenzanalyse gespeichert werden.

10. Verfahren nach einem oder mehreren der Ansprüche 1 bis 9, wobei das Frequenzspektrum das, zu einem vorwählbaren Wort gehört, mit bereits gespeicherten Frequenzspektren des gleichen Wortes aus einem anderen Gespräch verglichen wird, und dass auf diese Weise die Identität eines Gesprächspartners ermittelt wird.

11. Verfahren nach einem oder mehreren der Ansprüche 1 bis 10, wobei der erhaltene Text automatisch auf Schlüsselwörter untersucht wird und
- wobei anhand der erkannten Schlüsselwörter dem Gespräch automatisch eine Klassifikation zugeordnet wird.

12. Verfahren nach Anspruch 11, wobei die Schlüsselwörter und Klassifikationen in einer oder mehreren Tabellen abgespeichert und einander zugeordnet sind.

13. Verfahren nach Anspruch 11 oder 12, wobei die Klassifikation auf den Zweck des Anrufs gerichtet ist.

14. Verfahren nach einem oder mehreren der Ansprüche 11 bis 13, wobei die Klassifikation auf die Stimmung des ersten Gesprächspartners gerichtet ist.

15. Verfahren nach einem oder mehreren der Ansprüche 11 bis 14, wobei die ermittelte Klassifikation dem oder jeden zweiten Gesprächspartner online oder zeitversetzt zur Verfügung gestellt wird.

16. Verfahren nach einem oder mehreren der Ansprüche 1 bis 15, wobei das Gespräch ein Telefongespräch ist und der zweite Gesprächspartner vom ersten angerufen wurde.

17. Verfahren nach Anspruch 16, wobei der Telefonanruf von einem automatischen Gesprächsannahmesystem (7) entgegengenommen wurde, und das Gesprächsannahmesystem (7) den oder jeden zweiten menschlichen Gesprächspartner (2) hinzuschaltet oder das Gespräch an den oder jeden zweiten menschlichen Gesprächspartner (2) weiterleitet.

18. Verfahren nach einem oder mehreren der Ansprüche 1 bis 15, wobei ein Gesprächsannahmesystem (7) automatisch eine Gesprächsverbindung mit dem ersten Gesprächspartner (1) herstellt, vorzugsweise durch einen Telefonanruf.

19. Verfahren nach einem oder mehreren der Ansprüche 1 bis 18, wobei der zeitliche Verlauf des Gesprächs aufgezeichnet wird und der erkannte Text dem zeitlichen Verlauf zugeordnet und gespeichert wird.

20. Verfahren nach Anspruch 19, wobei eine graphische Darstellung der zeitlichen Abfolge des erkannten Text auf einem Anzeigegerät ausgegeben wird.

21. Verfahren nach Anspruch 19 oder 20, wobei die Analyse und/oder die graphische Darstellung online durchgeführt wird.

22. Verfahren nach einem oder mehreren der Ansprüche 19 bis 21, wobei einzelne Wörter des erkannten Textes einzelnen Abschnitten des zeitlichen Verlaufs zugeordnet werden.

23. Verfahren nach Anspruch 22, wobei die einzelnen Wörter mit den zugeordneten Abschnitten gespeichert werden.

24. Verfahren nach einem oder mehreren der Ansprüche 1 bis 23, wobei eine Frequenzanalyse der Stimmen des oder jeden Gesprächspartners durchgeführt wird.

25. Verfahren nach einem oder mehreren der Ansprüche 1 bis 24, wobei der erkannte Text dem jeweiligen Gesprächspartner zugeordnet wird.

26. Verfahren nach einem oder mehreren der Ansprüche 1 bis 25, wobei dem erkannten Text Schlüsselwörter aus einer voreinrichtbaren Tabelle zugeordnet werden.

27. Verfahren nach einem oder mehreren der Ansprüche 1 bis 26, wobei das Gesprächsannahmesystem (7) als ein Interactive Voice Response System (IVRS), vorzugsweise als ein automatisches IVRS, arbeitet.

28. Verfahren nach einem oder mehreren der Ansprüche 1 bis 27, wobei der erste Gesprächspartner (1) mit vorgegebenen Gesprächsstrukturen konfrontiert wird.

29. Verfahren nach einem oder mehreren der Ansprüche 1 bis 28, wobei als Gesprächsannahmesystem (7) und/oder als Spracherkennungssystem (5) mindestens ein Computer eingesetzt wird.

30. Verfahren nach Anspruch 29, wobei die Spracherkennung auf einem oder auf mehreren Computern (12, 14) ausgeführt wird, vorzugsweise parallel.

31. Verfahren nach Anspruch 29 oder 30, wobei die Spracherkennung in Form von mehreren Prozessen auf einem Computer oder verteilt auf mehrere Prozessoren eines Computers parallel ausgeführt wird.

32. Verfahren nach einem oder mehreren der Ansprüche 29 bis 31, wobei die Spracherkennung in einem Computer-Netzwerksystem parallel ausgeführt wird.

33. Verfahren nach einem oder mehreren der Ansprüche 1 bis 32, wobei die Sprachdaten des Gesprächs zumindest weitgehend unverändert gespeichert werden.

34. Verfahren nach einem oder mehreren der Ansprüche 1 bis 33, wobei Informationen über den aktuellen Gesprächszustand bei der Spracherkennung berücksichtigt werden.

35. Verfahren nach einem oder mehreren der Ansprüche 1 bis 34, wobei die Spracherkennung individuell auf einen Analyseauftrag ausgerichtet wird.

36. Verfahren nach einem oder mehreren der Ansprüche 1 bis 35, wobei zur Spracherkennung Methoden der Diktat-, Grammatik-, Einzelworterkennung und/oder des Keyword-Spotting eingesetzt werden.

37. Verfahren nach Anspruch 36, wobei die unterschiedlichen Methoden der Spracherkennung parallel eingesetzt werden.

38. Verfahren nach einem oder mehreren der Ansprüche 1 bis 37, wobei die Spracherkennung wiederholt ausgeführt wird.

39. Verfahren nach einem oder mehreren der Ansprüche 1 bis 38, wobei eine dynamische Anpassung der Spracherkennung erfolgt.

40. Verfahren nach Anspruch 39, wobei das Vokabular zur Spracherkennung variiert und/oder angepasst wird.

41. Verfahren nach Anspruch 39 oder 40, wobei zur dynamischen Anpassung der Spracherkennung in einem ersten Erkennungsschritt die Sprachdaten klassifiziert werden, vorzugsweise mit Methoden des Keyword-Spotting.

42. Verfahren nach Anspruch 41, wobei in einem weiteren Erkennungsschritt die Sprachdaten unter Hinzuziehung von speziellem Vokabular erneut untersucht werden.

43. Verfahren nach Anspruch 42, wobei iterativ weitere Erkennungsschritte durchgeführt werden, die vorzugsweise über Erkennungswahrscheinlichkeiten gesteuert werden.

44. Verfahren nach einem oder mehreren der Ansprüche 1 bis 43, wobei das Spracherkennungssystem und/oder der Spracherkennungsvorgang mit einem Datenbanksystem (16) und/oder Expertensystem gekoppelt wird.

45. Verfahren nach Anspruch 44, wobei durch die Kopplung weitergehende Informationen extrahiert werden.

46. Verfahren nach Anspruch 45, wobei die aus dem Datenbanksystem (16) und/oder Expertensystem gewonnenen weitergehenden Informationen, beispielsweise über den ersten Gesprächspartner (1), den Spracherkennungsvorgang dynamisch steuern.

47. Verfahren nach einem oder mehreren der Ansprüche 1 bis 46, wobei das Ergebnis der Analyse und/oder die weitergehenden Informationen in Form einer graphischen und/oder orthographischen Repräsentation zur Verfügung gestellt werden.

48. Verfahren nach einem oder mehreren der Ansprüche 1 bis 47, wobei das Ergebnis der Analyse und/oder die weitergehenden Informationen zeitversetzt zur Verfügung gestellt werden.

49. Verfahren nach einem oder mehreren der Ansprüche 1 bis 47, wobei die Analyse und/oder die Extraktion der weitergehenden Informationen nahezu zeitgleich (online) durchgeführt und/oder dem zweiten Gesprächspartner (2) zur Verfügung gestellt werden.

50. Verfahren nach einem oder mehreren der Ansprüche 1 bis 49, wobei die Informationen während des Gesprächs dem zweiten Gesprächspartner (2) zur Verfügung gestellt werden.

51. Verfahren nach einem oder mehreren der Ansprüche 1 bis 50, wobei der zweite Gesprächspartner (2) die Spracherkennung zumindest teilweise vorgibt, steuert und/oder lenkt.

52. Verfahren nach einem oder mehreren der Ansprüche 1 bis 51, wobei der zweite Gesprächspartner (2) Erkennungsmodi der Sprachanalyse (5) in Form von Benutzerprofilen laden kann oder dass diese automatisch geladen werden.

53. Verfahren nach einem oder mehreren der Ansprüche 1 bis 52, wobei neben dem Ergebnis der Sprachanalyse noch Informationen des Datenbanksystems (16) und/oder Expertensystems extrahiert und/oder zur Verfügung gestellt werden.

54. Verfahren nach einem oder mehreren der Ansprüche 1 bis 53, wobei das Ergebnis der Analyse des Gesprächs als Text gespeichert wird.

55. Verfahren nach einem oder mehreren der Ansprüche 1 bis 53, **gekennzeichnet durch** den Einsatz in einem Call-Center.

56. Verfahren nach einem oder mehreren der Ansprüche 1 bis 55, **gekennzeichnet durch** die Einbindung in eine Gesamtoberfläche und/oder in ein Gesamtprogramm.

57. Verfahren nach einem oder mehreren der Ansprüche 1 bis 56, **gekennzeichnet durch** den Einsatz zum Schulen von Agenten eines Call-Centers.

58. Verfahren nach einem oder mehreren der Ansprüche 1 bis 57, wobei das Spracherkennungssystem (5) auf die Stimme des ersten (1) oder des oder jeden zweiten Gesprächspartners (2) trainiert wird, vorzugsweise auf den Agent eines Call-Centers.

59. Verfahren nach Anspruch 58, wobei die Erkennungsrate des Spracherkennungssystems (5) dadurch gesteigert wird, dass der oder jede zweite Gesprächspartner (2) - vorzugsweise der Agent - einzelne, vom ersten Gesprächspartner (1) gesprochene Worte wiederholt, so dass das Spracherkennungssystem (5) die Sprachdaten der trainierten Stimme analysieren kann.

60. System zur Durchführung eines Verfahrens nach einem oder mehreren der vorstehenden Ansprüche, aufweisend
- mindestens eine elektronische Vorrichtung zur Erkennung und Extrahierung von Sprachdaten (Spracherkennungssystem, 5), die mit einer oder mehreren Vorrichtungen zur Erfassung von Sprachdaten (Gesprächsannahmesystem, 7) verbindbar ist, und
- ein oder mehrere Mittel zur Darstellung und/oder Speicherung von erkannten und/oder extrahierten Sprachdaten, wobei das oder jedes Mittel zur Darstellung (19) und/oder Speicherung direkt oder indirekt mit der Erkennungs- und Extrahierungsvorrichtung verbunden ist.

61. System nach Anspruch 60, wobei das Spracherkennungssystem mit mindestens einem Gesprächsannahmesystemen verbunden ist.

62. System nach Anspruch 61, wobei das Spracherkennungssystem mit zwei Gesprächsannahmesystemen verbunden ist.

63. System nach einem oder mehreren der Ansprüche 60 bis 62, aufeisend einen Frequenzanalysator.

64. System nach einem oder mehreren der Ansprüche 60 bis 63, wobei mindestens ein Gesprächsannahmesystem ein stationäres oder mobiles Telefon umfasst.

65. System nach einem oder mehreren der Ansprüche 60 bis 62, wobei mindestens ein Gesprächsannahmesystem ein IVRS, vorzugsweise ein automatisches IVRS ist.

66. System nach einem oder mehreren der Ansprüche 60 bis 65, wobei das Spracherkennungssystem einen oder mehrere Computer umfasst.

67. System nach einem oder mehreren der Ansprüche 60 bis 65, wobei das Gesprächsannahmesystem einen oder mehrere Computer umfasst.

68. System nach Anspruch 66, wobei die mehreren Computer in Form eines Netzwerkes verbunden sind.

69. System nach Anspruch 68, wobei das Netzwerk eine Client/Server - Struktur aufweist.

70. Computerprogramm mit Programmcode-Mitteln, um alle Schritte von einem beliebigen Verfahren gemäß einer beliebigen Kombination der Ansprüche 1 bis 59 auszuführen, wenn das Programm auf einem Computer ausgeführt wird.

71. Computerprogrammprodukt mit Programmcode-Mitteln, die auf einem computerlesbaren Datenträger gespeichert sind, und geeignet sind, ein Verfahren gemäß einer beliebigen Kombination der Ansprüche 1 bis 59 auszuführen, wenn sie auf einem Computer ausgeführt werden.

72. Computer mit einem flüchtigen und/oder nichtflüchtigen Speicher, in dem ein Computerprogramm nach Anspruch 70 gespeichert ist.
